# EUROPEAN PATENT APPLICATION

(11) **EP 1 109 093 A1**
(43) Date of publication of application: **20.06.2001**
(21) Application number: 99124941.8
(22) Date of filing: 14.12.1999
(51) Int. Cl.: G06F 3/12, G06K 15/00

(54) **Method and apparatus for printing transparent graphics**

(71) Applicant: SUN MICROSYSTEMS, INC., Palo Alto, California 94303 (US)
(72) Inventor: Ahrens, Kai, 24634 Padenstedt (DE)
(74) Representative: Betten & Resch

(57) **Abstract**

The invention relates to a method for printing documents containing transparent graphics, said method comprising: creating a transparency list containing the transparent graphics objects of said document; and printing the objects contained in said transparency list as bitmaps.

## Description

### FIELD OF THE INVENTION

The present invention relates to a method and an apparatus for printing transparent graphics, and in particular the present invention relates to the printing of documents containing transparent graphics.

### DESCRIPTION OF THE RELATED ART

The most common purpose for which present day personal computers are used is word processing. A word processing application program allows the user to create text documents, to edit them, and to print them out on a printer.

Application programs for word processing nowadays mostly offer the possibility to import graphics into or to generate graphics in text documents. Those graphics may be transparent graphics, which means the graphics may be transparently superimposed on another object of the text document, such as some text or any other graphic object. The most common way to represent such transparency information is the so-called alpha channel, which uses the uppermost eight bits of 32 bits for each pixel to represent the transparency information.

If transparent graphics are contained in a document such as a text document, then there is the possibility that those transparent graphics objects overlap with other graphics or text objects contained in the text document. In order to ensure an acceptable printing quality, according to the prior art such text documents containing transparent graphics objects have to be printed as bitmap objects, which means that the whole page of a document containing transparent graphic objects had to be converted into a bitmap for printing it by means of a printer.

Converting the whole page of a text document into a bitmap is performance and memory consuming. There is therefore a need for a printing method and apparatus which can print documents containing transparent graphics in a more efficient manner.

### SUMMARY OF THE INVENTION

According to an aspect of the present invention there is provided a method for printing documents containing transparent graphics objects which prints the transparent graphics objects as bitmaps and the other elements of the document, such as text elements, without converting them into a bitmap.

By printing only the transparent graphics objects as bitmaps memory as well as processing power can be saved.

For a document to be printed a transparency list is created into which all transparent graphics objects of the document are inserted. Preferably the other elements contained in the document such as text elements, lines, polygons, etc., are examined as to whether they overlap with the objects contained in the transparency list. In case of an overlap being found, the overlapping object also is inserted into the transparency list. Thereby it can be made sure that those elements overlapping with transparent graphics objects are as a whole printed as bitmaps. In this manner the undesirable splitting those overlapping elements such as text elements into elements printed as a bitmap and elements printed as characters can be avoided since such a split-up usually leads to unfavourable printing results. This is because when printing characters the printers today usually use some sophisticated algorithms to improve the resolution and the printing quality when printing those characters, however, for the parts of the text elements printed as a bitmap the printer could not carry out those algorithms. Therefore, splitting up a text element overlapping with a graphics object would cause it to be printed out in two different printing modes, one part as a bitmap, and the other one as the printing of text characters. This can be avoided by inserting the overlapping elements into the transparency list.

Preferably there is generated a frame for each object in the transparency list, the frame defining the area to be printed as a bitmap. By defining the area to be printed as a bitmap the frame also defines the area for which there is no such need to be printed as a bitmap, namely the area lying outside of the frame. For each object contained in the transparency list there is created such a frame defining the bitmap area.

Preferably the frame generated for each object in the transparency list is composed of several subframes, in order to reduce the area covered by the whole frame. A frame defining a bitmap area has to be rectangular, and if the area for which the need of bitmap printing exists is of a rather complicated shape, then generating subframes which together compose the total frame for this object can reduce the area covered by the total frame. The shape of the graphics object together with its overlapping object can be approximated by several rectangular subframes in order to minimize the area covered by the total frame composed of the several subframes.

The great advantage and utility of the present invention lies in the fact that it provides a tool for printing transparent graphics objects contained in a document without the need of converting the whole page where the transparent graphics objects are located into a bitmap. Thereby it saves memory and processing power when printing text documents which contain transparent graphics objects. Further features and advantages of the present invention will become more apparent from the following detailed description of its preferred embodiments.

### BRIEF DESCRIPTION OF THE DRAWINGS

Fig. 1 schematically shows a computer system to be used in connection with a preferred embodiment of the present invention.

Fig. 2 shows a text document containing transparent graphics objects and text.

Fig. 3 schematically shows the structure of a text document containing text and transparent graphics objects, and its conversion into a metafile.

Fig. 4 shows a flowchart of a printing method according to a preferred embodiment of the present invention.

Fig. 5 shows an example of a text document to be printed.

### DETAILED DESCRIPTION OF THE PREFERRED EMBODIMENT

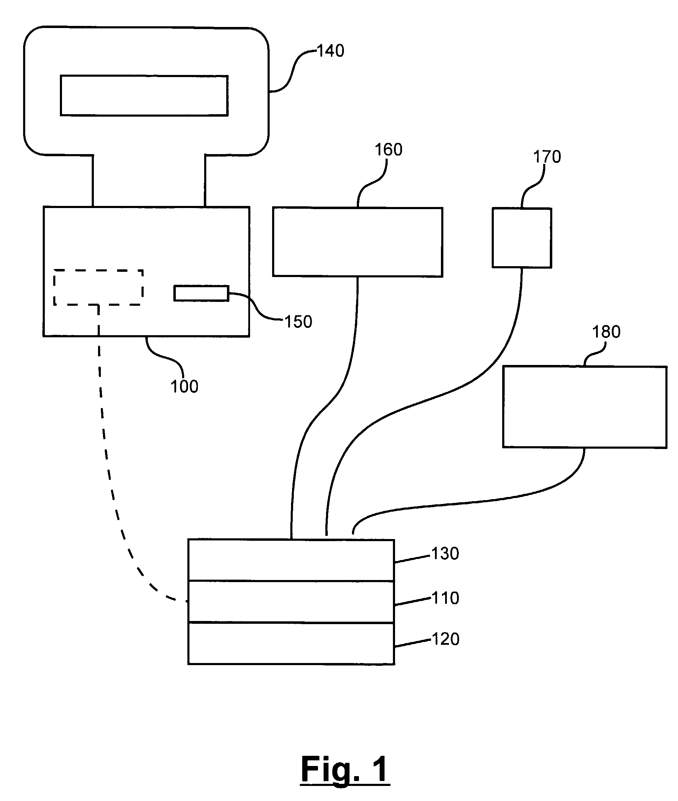

Fig. 1 schematically shows the configuration of a computer system to be used in connection with the preferred embodiment of the present invention. The computer 100 contains a CPU 110, a memory 120, and an I/O-unit 130. The computer 100 is capable of executing programs by carrying out computer instructions through CPU 110 which the CPU fetched from memory 120 and which may have been stored in a storage device 150 such as a CD-ROM or a floppy disk. The I/O-unit 130 is connected to a keyboard 160 and a mouse 170 to enable a user to input data to the computer, and it is further connected to a printer 180 to output documents as hardcopies. Computer 100 is further connected to a display unit 140 such as a monitor.

Those skilled in the art will readily recognize that the foregoing combination is just an illustrative example and not to be understood as limiting the features and advantages of the present invention as outlined in the following.

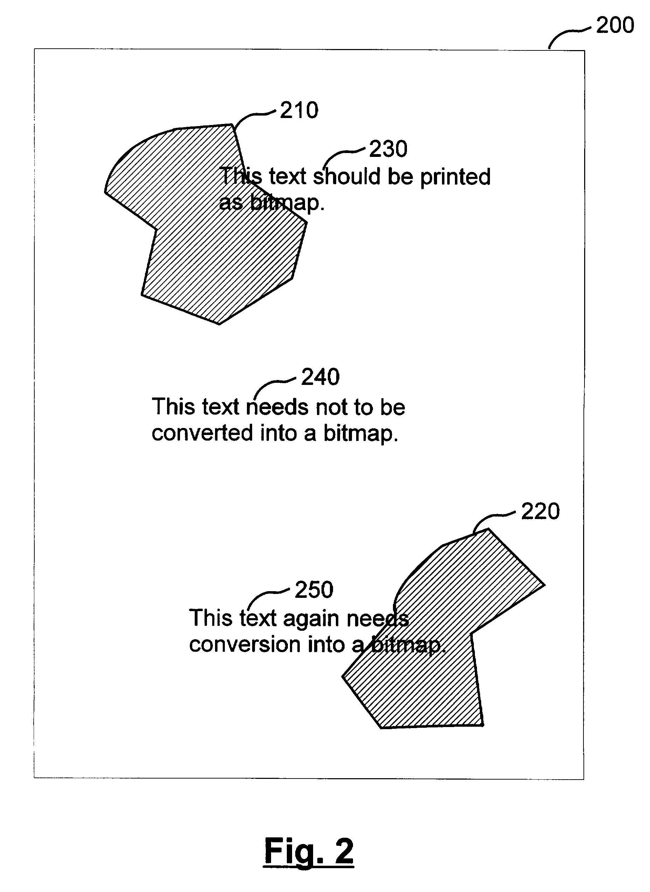

A word processing software running on computer 100 is used for generating a text document as shown in Fig. 2. The text document contains two graphics objects 210 and 220. It further contains three text objects 230, 240, and 250. Text objects 230 and 250 overlap with graphics object 210 and 220, respectively.

In document 200 shown in Fig. 2 the graphics objects 210 and 220 are transparent graphics objects. In prior art computer systems such a text document containing transparent graphics objects had to be printed as a whole as bitmap, in order to ensure that the text elements which might overlap with the transparent graphics objects are of acceptable printing quality.

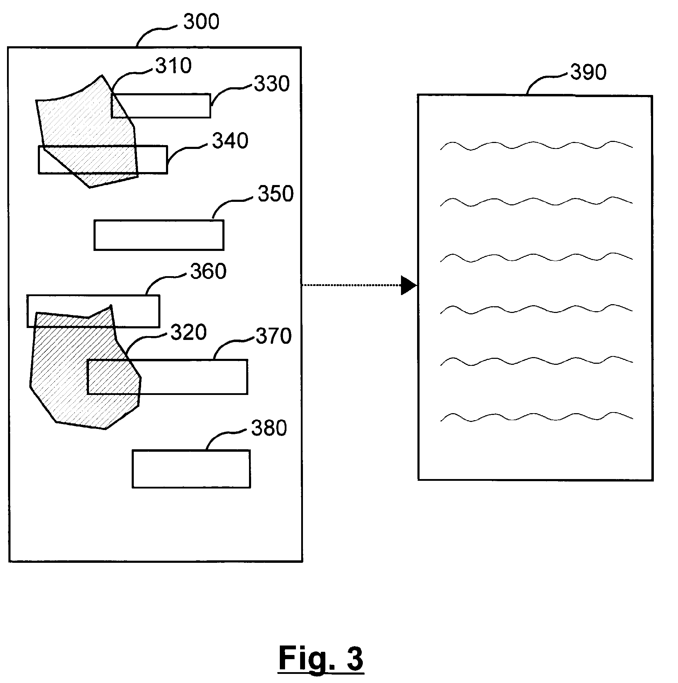

A text document having a similar configuration as the one shown in Fig. 2 is shown in Fig. 3. It contains transparent graphics objects 310 and 320 which overlap with text objects 330, 340, 360, and 370. The text document 300 further contains text objects 350 and 380 which do not overlap with any graphics object. The printing of such a text document according to the preferred embodiment of the present invention will be explained in more detail in the following.

At first there will be generated a so-called metafile which is a file containing information about the objects in the document to be printed. More particular, the metafile contains information about which kind of objects - graphics or text - are to be printed and where these objects are located. The generation of such a metafile is a step often taken in a printing process in order to be able to provide the printer with the necessary information it needs for carrying out the printing procedure. Based on the text document to be printed therefore there is generated a metafile which is schematically shown in Fig. 3 as metafile 390.

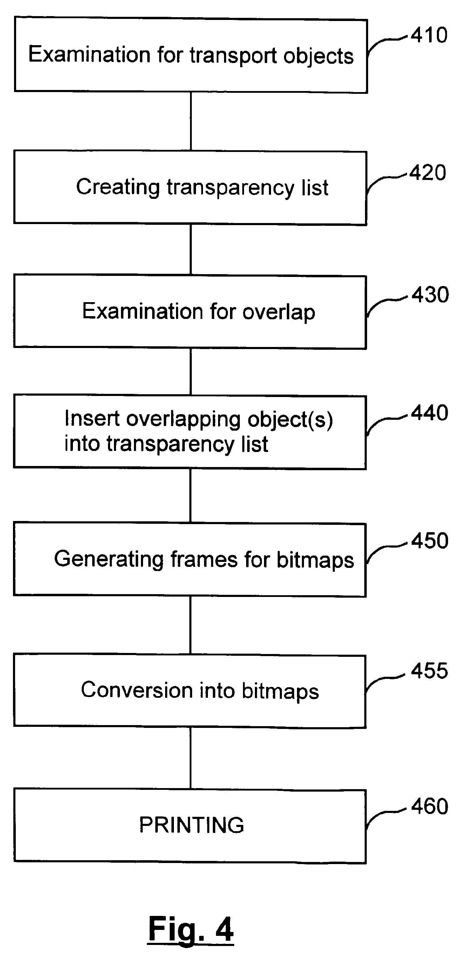

The metafile now contains information about which objects the document to be printed contains, as well as information about their location. The printing process according to a preferred embodiment of the present invention now will be further explained in connection with Fig. 4.

At first the metafile generated as shown in Fig. 3 will be examined as to whether it contains transparent objects. Transparent objects are objects which are capable to look transparent, in other words other objects may for the user look like as lying behind those transparent objects. The information about how transparent such a transparent object should look like usually is contained in the so-called alpha channel. The alpha channel is a number of bits for each pixel containing the transparency information.

As mentioned before metafile 390 now is examined as to whether it contains transparent objects. The transparent objects found in step 410 then are used in step 420 to create a transparency list containing the transparent objects. The transparent objects are inserted into the transparency list.

In step 430 it is then checked whether the objects in the metafile other than the transparent overlap with any of the objects contained in the transparency list in step 430. Each object being found to overlap with an object contained in the transparency list is itself inserted into the transparency list in step 440. By sequentially going through all objects and by inserting all the objects which overlap with any object contained in the transparency list into the transparency list, this list then finally is completed.

For the document shown in Fig. 3 the steps described before would look as follows. At first transparent graphics objects 310 and 320 would be inserted into the transparency list. Then the remaining objects 330 to 380 of the text document would be examined as to whether they overlap with the transparent objects contained in the transparency list. This can be simply done by checking the remaining objects one after another as to whether they overlap with any of the objects contained in the transparency list. By doing so it is found that objects 330 and 340 overlap with the transparent graphics object 310, therefore objects 330 and 340 are inserted into the transparency list.

Since object 350 does not overlap with any of the objects contained in the transparency list, it needs not to be inserted therein. However, objects 360 and 370 overlap with graphics object 320, therefore the objects 360 and 370 are inserted into the transparency list, thereby completing the list. Object 380 does not overlap with any of the objects contained in the transparency list, therefore object 380 needs not to be inserted into the transparency list.

The now completed transparency list contains a list of objects for which printing those objects as bitmaps is necessary. A bitmap always has to have a rectangular shape, therefore the shapes of the bitmaps to be printed still have to be determined. This is done in step 450 by generating frames for the bitmaps to be printed.

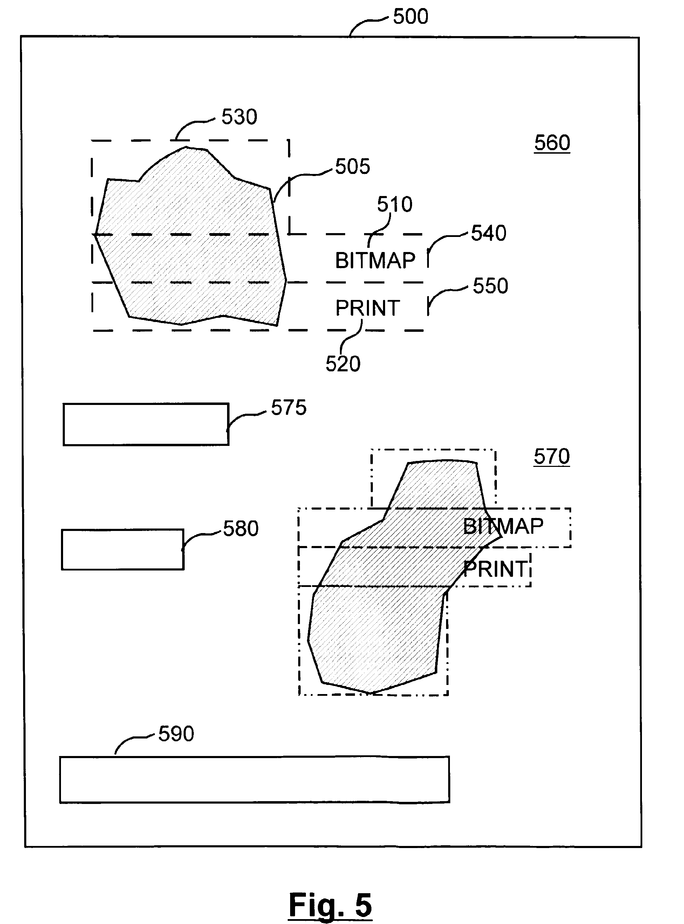

Fig. 5 schematically shows the frames generated according to a preferred embodiment of the invention in case of document 500. Document 500 contains transparent graphics object 505, the text object "bitmap" 510, and the text object "print" 520. Graphics object 505 is contained in the transparency list since it is a transparent graphics object, text objects 510 and 520 are included in the transparency list since they overlap with transparent graphics object 505. Together they form an overlapping transparent compound object 560 which needs to be printed as bitmap and which is printed as bitmap graphics according to an embodiment of the present invention in a manner which saves memory and processing power. For that purpose the frame of the bitmap object to be printed has to be generated such that it is comparably small in order to reduce the area which is printed as bitmap graphics.

For this purpose the overlapping bitmap compound object 560 containing objects 505, 510, and 520 is not printed as a bitmap having a single rectangular frame, but rather by a bitmap the shape of which is formed by three subframes 530, 540, and 550. If only a single frame covering all the objects 505, 510, and 520 would be generated, then it would need to be as wide as the subframe 540 shown in Fig. 5. However, by composing the frame of the bitmap to be printed for overlapping compound object 560 by three subframes 530, 540, and 550, the total area covered by overlapping bitmap object 560 can be significantly reduced. As a result, the memory necessary for storing the bitmap graphic as well as the processing power necessary to process it can be reduced.

A similar processing is carried out for overlapping bitmap compound object 570 shown in Fig. 5 which also contains a transparent graphics object and two text objects, and where also the overall bitmap for the total bitmap object to be printed is composed of - in case of object 570 - four subframes.

In the example of document 500 shown in Fig. 5 overlapping bitmap compound objects 560 and 570 then are printed as bitmaps, and text objects 575, 580, and 590 can be printed as normal text in step 460 of Fig. 4.

By carrying out a bitmap printing only for those parts of a text document for which it actually is necessary, the memory and processing power necessary for the printing can be significantly reduced. Those parts of a text document which contain no elements overlapping with transparent graphics or containing no transparent graphics themselves, can be printed as normal text thereby taking advantage of the sophisticated performance enhancement algorithms implemented in printers for the printing of text characters. The processing and memory intensive procedure of bitmap printing is reduced to those areas where it actually is necessary in order to ensure an acceptable level of printing quality. Those areas are the areas where transparent graphics objects are located, as well as those areas where text objects are located which overlap with transparent graphics objects. Those text objects overlapping with transparent graphics objects need to be printed as bitmaps as a whole since otherwise parts of the text objects would be printed as bitmaps and other parts would be printed as text. Due to the different processing algorithms implemented in printers for text and printing of bitmap graphics this would lead to an inconsistent printing result for single text objects. Therefore according to a preferred embodiment of the present invention those text objects overlapping with transparent graphics objects are treated together with the corresponding graphics object with which they overlap as a single overlapping compound object. In case of Fig. 5 those are overlapping compound objects 560 and 570, and they are respectively printed as bitmap graphics as a whole as defined by their corresponding frames.

In order to print the overlapping compound objects 560 and 570 they are converted into bitmaps as defined the corresponding frames, and then the bitmaps are printed. In Fig. 4, the step of conversion into bitmaps is indicated as step 455, in which the overlapping compound objects 560 and 570 are converted into bitmaps. Step 460 of Fig. 4 then indicates the printing carried out for those bitmaps.

This means that the bitmap frames cover less than the entire page of a document, and therefore not the whole page of a document has to be converted into a bitmap in case of said page containing transparent graphics. Rather some portions of a document page such as page 500 shown in Fig. 5 are converted to a bitmap while other portions of the page are processed as non-bitmapped data, in case of Fig. 5 as text.

By reducing the bitmap printing to those objects and text document elements for which it actually makes sense, namely the transparent graphics objects and the overlapping text elements, the present invention significantly reduces the resources necessary for printing as well as increases the printing speed.

Those skilled in the art will readily recognize that the individual steps mentioned before in connection with the procedure of printing according to a preferred embodiment of the present invention can be performed by a computer by carrying out computer program instructions through the CPU of the computer. The present invention therefore may be implemented as a computer program containing computer program code causing the CPU of a computer to carry out the steps according to a preferred embodiment of the present invention. Therefore any means configured to execute any of the steps described in the foregoing description in connection with a preferred embodiment of the present invention can be realized by a computer program or a portion of a computer program containing computer program code causing the computer to execute the corresponding step. The invention, however, may also be implemented by dedicated electronic circuits which are configured such that they perform the individual steps explained before in connection with a preferred embodiment of the present invention. The invention may also be implemented by a storage medium having thereon installed computerexecutable program code which causes the CPU of a computer to perform the individual steps explained before in connection with a printing procedure according to a preferred embodiment of the present invention.

Application code for implementing an embodiment of the present invention may be embodied in any form of a computer program product, where a computer program product comprises a medium configured to store or transport computer-readable code, or in which computer-readable code may be embedded. Some examples of such a computer program product or a computer-readable medium are CD-ROM disks, ROM cards, floppy disks, magnetic tapes, computer hard disk drives, servers on a network, carrier waves, transmission links, such as a LAN connection, an internet connection, or the like.

The computer program product may also comprise signals which do not use carrier waves, such as digital signals transmitted over a network (including the internet) without the use of a carrier wave. The computer program product may then be implemented as any transmission link, such as a connection to the internet, a LAN, a WAN, a public switched telephone network, or the like.

Moreover, the invention may be implemented in a client-server architecture, which means that some or all parts of a computer program are running on a server, and the remaining parts are running on a client. Through access to the server, the client may then in cooperation with the server implement a computer program embodying an implementation of the present invention.

While the present invention hereinbefore has been explained in connection with a preferred embodiment thereof, those skilled in the art will readily recognize that modifications can be made to this embodiment without departing from the spirit and scope of the present invention. It is for example readily apparent to those skilled in the art that the present invention can be applied to the printing of any document containing transparent graphics, not only to text documents containing transparent graphics. Furthermore, the overlapping objects which overlap with the transparent graphics objects as for example shown in Fig. 2, Fig. 3, or Fig. 5, may not be only text objects but may be any other objects, such as graphics, lines, polygons, any vector objects/vector graphics, etc. Similarly, the non-overlapping objects shown in Fig. 2, Fig. 3, or Fig. 5 may not only be text objects, but any other objects as mentioned before. The present invention therefore generally provides a tool for printing documents containing transparent graphics objects and any other objects which either overlap or do not overlap with the transparent graphics objects by dealing with those objects as explained in detail in the foregoing description. Only for examplary purposes the invention has been described by referring to text elements as the non-transparent objects which may overlap or may not overlap with the transparent graphics objects. It is, however, clear to the expert that those overlapping or non-overlapping objects can also take the form of any other non-transparent objects.

## Claims

1. A method for processing documents containing transparent graphics for printing, said method comprising:
creating (420) a transparency list containing the transparent graphics objects of said text document; and
converting (455) the objects contained in said transparency list into bitmaps for printing.

2. The method of claim 1, further comprising:
generating an information signal to be transmitted based on the result of said processing for enabling the printing of said document based on said signal.

3. The method of claim 1, wherein
bitmap frames cover less than the entire page of a document.

4. The method of claim 1, further comprising:
converting some portions of a document page into bitmap data, while other portions of the page are processed as non-bitmapped data.

5. The method of claim 1, further comprising:
examining the document elements for overlap with at least one object contained in said transparency list; and
inserting said overlapping objects into said transparency list.

6. The method of claim 1, further comprising:
generating a frame for each overlapping compound object (560, 570) in said transparency list, an overlapping compound object being formed by a transparent object and the objects overlapping said transparent object, said frame defining the area to be printed as a bitmap for printing the overlapping compound object.

7. The method of claim 6, further comprising:
generating said frame for each overlapping compound object (560, 570) as a composition of subframes (530, 540, 550).

8. An apparatus for processing documents containing transparent graphics for printing, said apparatus comprising:
a transparency list generating means for creating a transparency list containing the transparent graphics objects of said document; and
a converting means to convert the objects contained in said transparency list into bitmaps for printing.

9. The apparatus of claim 8, further comprising:
means for generating an information signal to be transmitted based on the result of said processing for enabling the printing of said document based on said signal.

10. The apparatus of claim 8, wherein bitmap frames cover less than the entire page of a document.

11. The apparatus of claim 8, further comprising:
a bitmap converting means for converting some portions of a document page to bitmap data while other portions of the page are processed as non-bitmapped data.

12. The apparatus of claim 8, further comprising:
examining means for examining the document elements for overlap with at least one object contained in said transparency list; and
inserting means for inserting said overlapping objects into said transparency list.

13. The apparatus of claim 8, further comprising:
generating means for generating a frame for each overlapping compound object in said transparency list, an overlapping compound object (560, 570) being formed by a transparent object and the objects overlapping said transparent object, said frame defining the area to be printed as a bitmap for printing the overlapping compound object.

14. The apparatus of claim 13, further comprising:
generating means for generating said frame for each overlapping compound object as a composition of subframes.

15. A computer program product comprising computer program code for processing documents containing transparent graphics for printing, said computer program code comprising:
a computer program code portion for creating a transparency list containing the transparent graphics objects of said text document;
a computer program code portion for converting the objects contained in said transparency list into bitmaps for printing.

16. The computer program product of claim 15, further comprising;
a computer program code portion for generating an information signal to be transmitted based on the result of said processing for enabling the printing of said document based on said signal.

17. The computer program product of claim 15, wherein bitmap frames cover less than the entire page of a document.

18. The computer program product of claim 15, further comprising:
a computer program code portion for converting some portions of a document page into bitmap data, while other portions of the page are processed as non-bitmapped data.

19. The computer program product of claim 15, wherein said computer program code further comprises:
a computer program code portion for examining the document elements for overlap with at least one object contained in said transparency list; and
a computer program code portion for inserting said overlapping objects into said transparency list.

20. The computer program product of claim 15, wherein said computer program code further comprises:
a computer program code portion for generating a frame for each overlapping compound object (560, 570) in said transparency list, an overlapping compound object being formed by a transparent object and the objects overlapping the transparent object, said frame defining the area to be printed as a bitmap for printing the overlapping compound object.

21. The computer program product of claim 20, wherein said computer program code further comprises:
a computer program code for generating said frame for each overlapping compound object as a composition of subframes (530, 540, 550).

22. A computer program comprising computer program code for processing documents containing transparent graphics for printing, said computer program code comprising:
a computer program code portion for creating a transparency list containing the transparent graphics objects of said text document;
a computer program code portion for converting the objects contained in said transparency list into bitmaps for printing.

23. The computer program of claim 22, further comprising;
a computer program code portion for generating an information signal to be transmitted based on the result of said processing for enabling the printing of said document based on said signal.

24. The computer program of claim 22, wherein bitmap frames cover less than the entire page of a document.

25. The computer program of claim 22, said computer program code further comprising:
a computer program code portion for converting some portions of a document page into bitmap data, while other portions of the page are processed as non-bitmapped data.

26. The computer program of claim 22, said computer program code further comprising:
a computer program code portion examining the text document elements for overlap with at least one object contained in said transparency list; and
a computer program code portion inserting said overlapping objects into said transparency list.

27. A computer programmed such that it is capable of carrying out a method for processing documents containing transparent graphics for printing, said method comprising:
creating (420) a transparency list containing the transparent graphics objects of said text document; and
converting (455) the objects contained in said transparency list into bitmaps for printing.
